# EUROPEAN PATENT SPECIFICATION

(11) **EP 3 378 976 B1**
(45) Date of publication and mention of the grant of the patent: **07.04.2021**
(21) Application number: 16865597.5
(22) Date of filing: 08.09.2016
(51) Int. Cl.: D01F 6/74, C08G 73/10, D01F 6/78, D01D 5/06, D01D 1/02

(54) **POLYIMIDE FIBER AND PREPARATION METHOD THEREFOR**
POLYIMIDFASER UND HERSTELLUNGSVERFAHREN DAFÜR
FIBRE DE POLYIMIDE ET SON PROCÉDÉ DE PRÉPARATION

(30) Priority: 17.11.2015 CN 201510790527
(43) Date of publication of application: 26.09.2018
(73) Proprietor: Changchun Institute Of Applied Chemistry Chinese Academy Of Sciences, Changchun, Jilin 130022 (CN)
(72) Inventor: QIU, Xuepeng, Changchun Jilin 130022 (CN); DAI, Xuemin, Changchun Jilin 130022 (CN); LI, Guomin, Changchun Jilin 130022 (CN); DONG, Zhixin, Changchun Jilin 130022 (CN); LIU, Fangfang, Changchun Jilin 130022 (CN); JI, Xiangling, Changchun Jilin 130022 (CN); GAO, Lianxun, Changchun Jilin 130022 (CN)
(74) Representative: Hoffmann Eitle
(86) International application number: PCT/CN2016/098426
(87) International publication number: WO 2017/084419

(56) References cited:
- CN-A- 102 041 576
- CN-A- 105 297 165
- CN-A- 105 297 166
- JP-A- 2006 249 186
- JP-A- 2010 139 930
- YIN CHAOQING ET AL: "Enhanced mechanical and hydrophobic properties of polyimide fibers containing benzimidazole and benzoxazole units", EUROPEAN POLYMER JOURNAL, PERGAMON PRESS LTD. OXFORD, GB, vol. 67, 30 March 2015 (2015-03-30), pages 88-98, XP029230522, ISSN: 0014-3057, DOI: 10.1016/J.EURPOLYMJ.2015.03.028
- KLOP E A ET AL: "XRD study of the new rigid-rod polymer fibre PIPD", POLYMER, ELSEVIER SCIENCE PUBLISHERS B.V, GB, vol. 39, no. 24, 1 November 1998 (1998-11-01), pages 5987-5998, XP027121116, ISSN: 0032-3861 [retrieved on 1998-11-01]
- TOMLIN D W ET AL: "The role of hydrogen bonding in rigid-rod polymers: the crystal structure of a polybenzobisimidazole model compound", POLYMER, ELSEVIER SCIENCE PUBLISHERS B.V, GB, vol. 41, no. 25, 10 December 2000 (2000-12-10), pages 9003-9010, XP085002586, ISSN: 0032-3861, DOI: 10.1016/S0032-3861(00)00242-1
- HAGEMAN J C L ET AL: "An ab initio study of the structural and physical properties of a novel rigid-rod polymer: PIPD", POLYMER, ELSEVIER SCIENCE PUBLISHERS B.V, GB, vol. 40, no. 5, 1 March 1999 (1999-03-01), pages 1313-1323, XP027122988, ISSN: 0032-3861 [retrieved on 1999-03-01]
- DAI XUEMIN ET AL: "High-performance polyimide copolymer fibers derived from 5-anino-2-(2-hydroxy-4-aminobenzene)-benzo xazole: Preparation, structure and properties", POLYMER, ELSEVIER SCIENCE PUBLISHERS B.V, GB, vol. 150, 29 June 2018 (2018-06-29), pages 254-266, XP085453506, ISSN: 0032-3861, DOI: 10.1016/J.POLYMER.2018.06.079
- MA, XIAOYE ET AL.: 'Effect of Multiple H-Bonding on the Properties of Polyimides Containing the Rigid Rod Groups' JOURNAL OF POLYMER SCIENCE PART A: POLYMER CHEMISTRY vol. 54, no. 4, 28 August 2015, ISSN 1099-0518 pages 570 - 581, XP055382438
- ZHANG T ET AL: "XPS study of PBO fiber surface modified by incorporation of hydroxyl polar groups in main chains", APPLIED SURFACE SCIENCE, ELSEVIER, AMSTERDAM, NL, vol. 256, no. 7, 15 January 2010 (2010-01-15), pages 2073-2075, XP026857934, ISSN: 0169-4332 [retrieved on 2009-09-23]

## Description

### TECHNICAL FIELD

This invention relates to the technical field of high-performance organic fibers, and particularly to a polyimide fiber and a preparation method thereof.

### BACKGROUND ART

A polyimide fiber is one of high-performance organic synthetic fibers, and has a plurality of excellent properties, such as high strength, high modulus, good resistance to high temperature, good resistance to low temperature, good flame resistance, good resistance to chemical corrosion, good irradiation resistance, etc. It plays a more and more important role in various fields, such as aerospace, national defence and military industry, new construction material, environmental protection, fire prevention, etc. Two major methods, namely, one-step and two-step methods, are generally used to fabricate PI fibers. In the one-step method, PI fibers are directly generated from a soluble PI solution. The two-step method is a method in which diamine and dianhydride are first subjected to a polycondensation reaction to generate a polyamic acid solution, which is then spun to obtain a polyamic acid fiber, and the polyamic acid fiber is further subjected to processes of imidization, thermal drawing, and the like to finally obtain a polyimide fiber.

Here, the preparation of polyimide fibers using the single-step method is advantageous in that imidization is not required for precursor fibers to be spun, the process flow is short, and the polyimide fiber obtained has relatively high mechanical properties. Although this method is considered as the most effective means to prepare the high-performance PI fibers, the presence of soluble monomers and toxic solvents restricts the industrial production. The preparation of polyimide fibers using the two-step method is advantageous in that processability challenges caused by insolubility and infusibility of the polyimide are solved, there are many types of low-toxicity synthetic raw materials and useful solvents, the residual amount of solvents in the fiber is low, and it is suitable for industrial production.

With the development of science and technology, a polyimide fiber having high strength and high modulus has been increasingly desired at present. Therefore, how to prepare a polyimide fiber having high strength and high modulus by the two-step method has become a main trend in both domestic and foreign research and development. For example, Senbiao Huang, et al., (e-Polymers, 2012, no.086) has obtained a biphenyl type polyimide fiber containing a benzoxazole structure, which has a good spinnability, a highest strength of 0.73 GPa, and an initial modulus of 39.5 GPa, by copolymerization using the two-step method. However, the existing technology for preparing a polyimide fiber by the two-step method has certain disadvantages in terms of improving the strength and the modulus of fibers.

### SUMMARY OF INVENTION

In view of this, this application provides a polyimide fiber and a preparation method thereof. The polyimide fiber provided by this invention has properties of high strength and high modulus and can be used at a relatively high temperature, contributing to application.

This invention provides a polyimide fiber produced from a polymer as defined in the claims.

The polymer has a structure of Formula III, Formula IV, Formula V, Formula VI, Formula VII, Formula VIII, Formula IX, Formula X, Formula XI, or Formula XII: 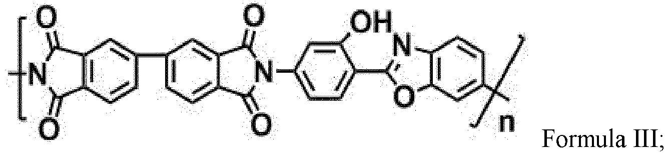 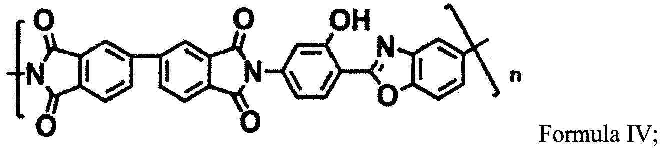 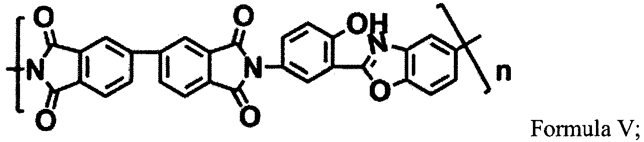 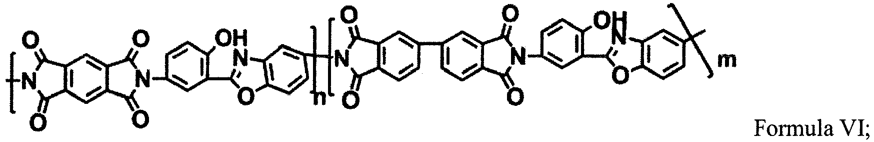 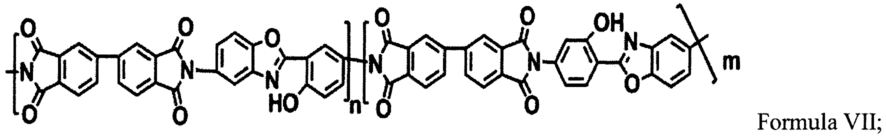 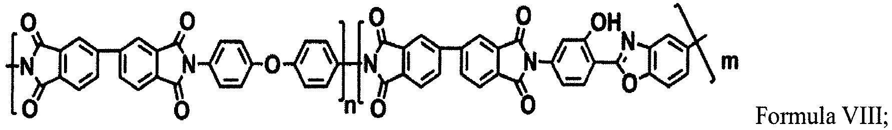 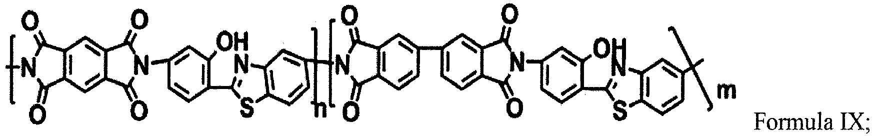 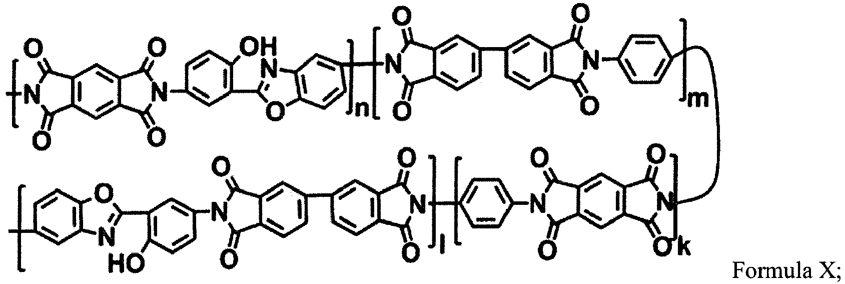 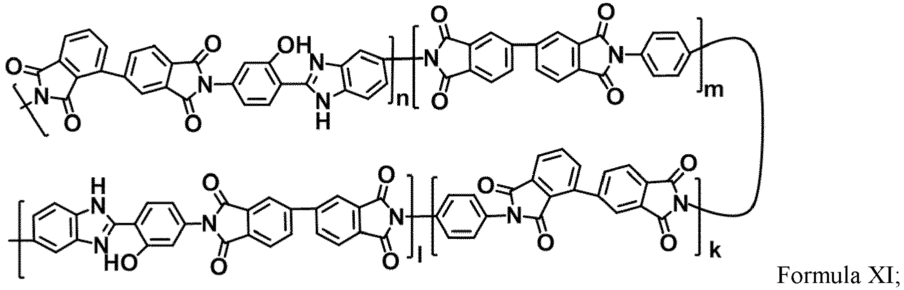 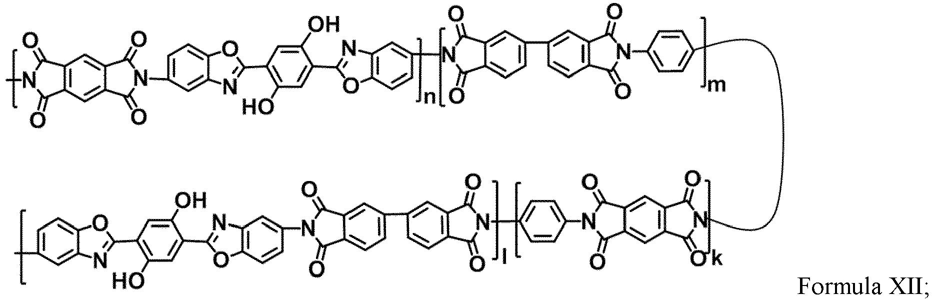 wherein each of n, m, 1, and k represents a polymerization degree.

This invention provides a preparation method for a polyimide fiber as defined above, comprising the steps of:
A) subjecting a dianhydride compound and a diamine compound to a polymerization reaction in a solvent to obtain a polyamic acid solution, wherein said diamine compound comprises a diamine having a structure of Formula 12 or Formula 13: 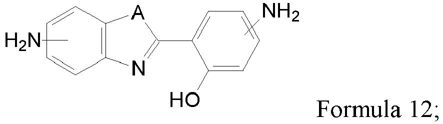 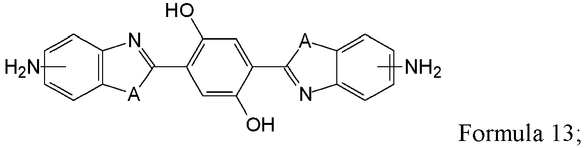 wherein A is selected from S or O;
   said dianhydride compound comprises one or more of dianhydrides having structures of Formula 14 and Formula 15: 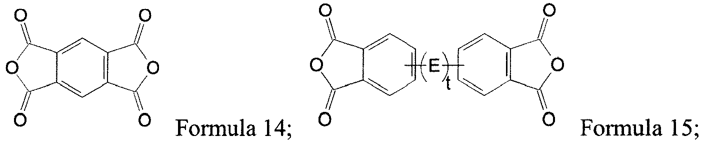 in Formula 15, E is selected from any one of S, O, C(CF₃)₂, C(CH₃)₂, C=O, C=S, 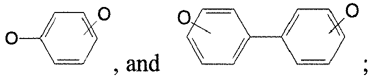 and t is selected from 0 or 1;
B) subjecting said polyamic acid solution to spinning to obtain a polyamic acid fiber; and
C) sequentially subjecting said polyamic acid fiber to imidization and thermal drawing to obtain a polyimide fiber.

Preferably, said diamine compound further comprises one or more of diamines having structures of Formulae 16 to 22: 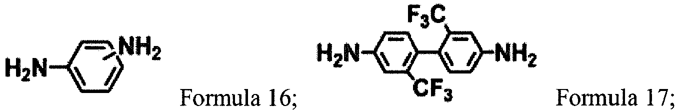 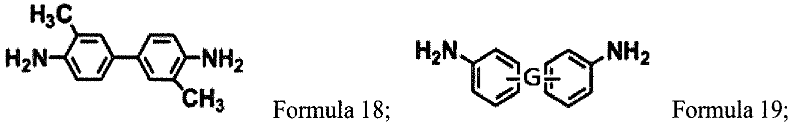 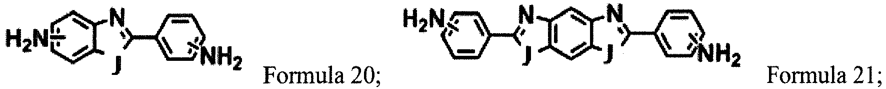 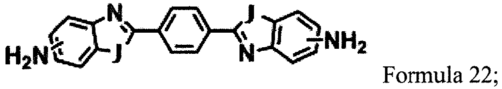 wherein -G- is selected from -O-, -S-, -CH₂-, 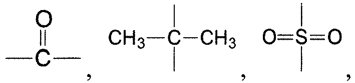 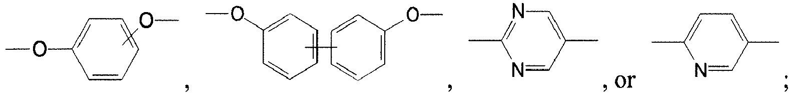 and

J is selected from O, S, or NH.

Preferably, the temperature of said polymerization reaction is in a range from -10°C to 50°C.

Preferably, the intrinsic viscosity of said polyamic acid solution is between 1.5 dL/g and 3.7 dL/g.

Preferably, the concentration of said polyamic acid solution is 5 wt%-35 wt%.

Preferably, the molar ratio of said dianhydride compound to said diamine compound is 1:(0.8-1.5).

Compared to the prior art, a polyimide fiber containing a hydroxybenzoxazole or hydroxybenzothiazole structure is produced by a wet or dry-jet wet spinning process in this invention. The polyimide fiber having this structure of this invention has a higher rigidity and can introduce a hydrogen bond to provide an interaction between molecular chains so as to influence the arrangement of the molecular chain in the polymer and the crystallinity, which imparts more excellent mechanical properties to the polyimide fiber. Furthermore, the polyimide fiber obtained in this invention has a higher glass transition temperature (Tg) and a better heat resistance, and is more suitable to be used in various aspects, such as spacecrafts, national defence construction, ocean exploitation, sports equipment, protective tools, cables, nuclear industry, fireproof, flame-retardant materials, and the like. Furthermore, a hydroxy group is introduced in this invention to allow the increase of active groups on the surface of the fiber, and this is also more suitable to be used in the field of fiber-reinforced composite materials. It is indicated by experimental results that the polyimide fiber provided by this invention has a highest strength of 4.5 GPa and a modulus of up to 212 GPa.

Furthermore, the production process for preparing a polyimide fiber of this invention is stable.

### DESCRIPTION OF DRAWINGS

In order to illustrate the technical solutions in embodiments of this present invention or in the prior art more clearly, figures required for describing the embodiments or the prior art will be simply introduced below. It is apparent that the figures described below are merely embodiments of this invention, and other figures may be further obtained by those of ordinary skill in the art according to the figures provided without inventive efforts.
Fig. 1 is a scanning electron microscope image of a finished fiber spun in Example 1 of this invention;
Fig. 2 is a DSC plot of a finished fiber spun in Example 2 of this invention;
Fig. 3 is a FT-IR spectrum of a finished fiber prepared in Example 3 of this invention;
Fig. 4 is a FT-IR spectrum of a finished fiber prepared in Example 4 of this invention; and
Fig. 5 is a FT-IR spectrum of a finished fiber prepared in Example 7 of this invention.

### DESCRIPTION OF EMBODIMENTS

The polyimide fiber provided by this invention has characteristics of high strength and high modulus, excellent mechanical properties, and good heat resistance, and can be used at a relatively high temperature.

In this invention, the repeating unit comprises a hydroxybenzoxazole or hydroxybenzothiazole structure. This structure allows the polyimide fiber to have a higher rigidity and be able to introduce a hydrogen bond to provide an interaction between molecular chains so as to influence the arrangement of the molecular chain in the polymer and the crystallinity, which imparts more excellent mechanical properties to the polyimide fiber.

In an embodiment of this invention, the fineness of said polyimide fiber is between 2 dtex and 4 dtex. The polyimide fibers provided in embodiments of this invention may have a breaking strength of 2.3 GPa-4.5 GPa, a modulus of 105 GPa-212 GPa, and an elongation at break of 2.1%-3.4%. In this invention, said polyimide fiber may have a glass transition temperature of 310°C-320°C.

Accordingly, this invention provides a preparation method for a polyimide fiber, comprising the steps of:
A) subjecting a dianhydride compound and a diamine compound to a polymerization reaction in a solvent to obtain a polyamic acid solution, wherein said diamine compound comprises a diamine having a structure of Formula 12 or Formula 13: 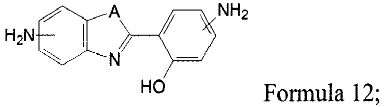 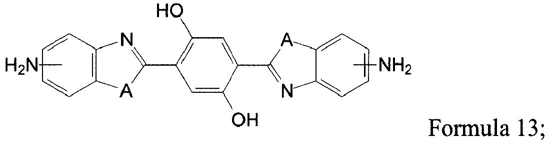 wherein A is selected from S or O;
   said dianhydride compound comprises one or more of dianhydrides having structures of Formula 14 and Formula 15: 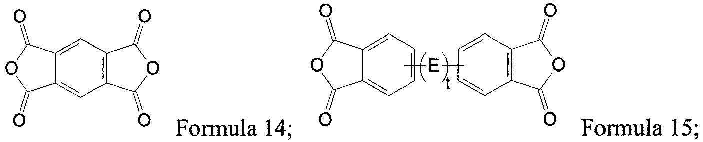 in Formula 15, E is selected from S, O, C(CF₃)₂, C(CH₃)₂, C=O, C=S, 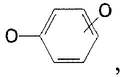 or 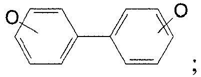 and t is selected from 0 or 1;
B) subjecting said polyamic acid solution to spinning to obtain a polyamic acid fiber; and
C) sequentially subjecting said polyamic acid fiber to imidization and thermal drawing to obtain a polyimide fiber.

In order to overcome the disadvantages in terms of the strength and the modulus of the polyimide fiber prepared by the existing two-step method, this invention provides a preparation method for a polyimide fiber having high strength and high modulus, which may be divided into four procedures: the preparation of a spinning solution, the spinning of a polyamic acid fiber, the imidization of the polyamic acid fiber, and the thermal drawing of the polyimide fiber.

In an embodiment of this invention, a diamine compound and a dianhydride compound are added to a solvent and reacted for a certain period to obtain a polyamic acid solution, which is a light yellow viscous polyamic acid spinning solution, and the solution can be directly used as spinning slurry after filtration.

In this invention, said diamine compound comprises a diamine having a structure of Formula 12 or Formula 13. In Formula 12 and Formula 13, A is selected from S or O; the amino groups at both ends may be at any position of positions 3, 4, 5, and 6 of the benzene ring. Particularly, said diamine compound may comprises one or more of 6-amino-2-(2-hydroxy-4-aminophenyl)benzoxazole, 5-amino-2-(2-hydroxy-4-aminophenyl)benzoxazole, 5-amino-2-(2-hydroxy-5-aminophenyl)benzoxazole, 5-amino-2-(2-hydroxy-4-aminophenyl)benzothiazole, and 2,5-di(5-amino-benzoxazol-2-yl)-1,4-benzenediol; and the structural formulae thereof are Formula 12-1, Formula 12-2, Formula 12-3, Formula 12-4, and Formula 13-1 respectively:

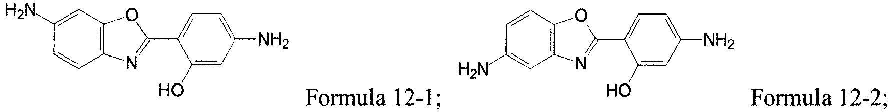

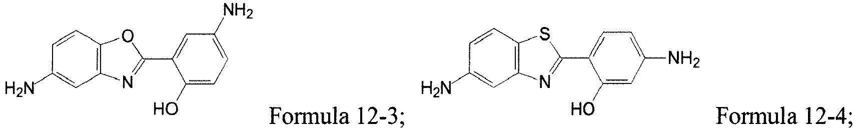

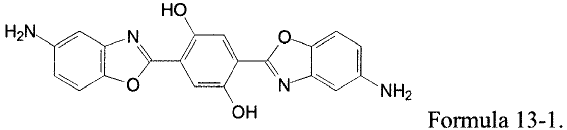

The source of the diamine having a structure of Formula 12 or Formula 13 is not particularly limited in this invention, and commercially available products may be used or the diamine may be self-prepared.

In order to further improve the performance of the fiber, said diamine compound preferably further comprises one or more of diamines having structures of Formulae 16 to 22, and more preferably further comprises one or more of diamines having structures of Formulae 16 to 19; and Formulae 16 to 22 are as follows: 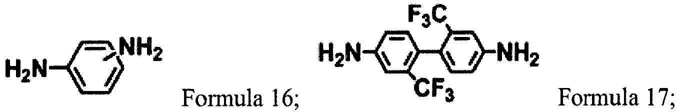 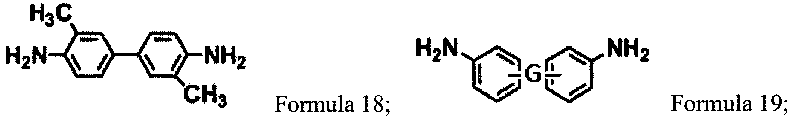 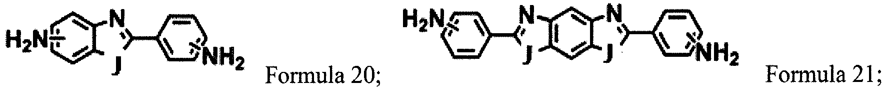 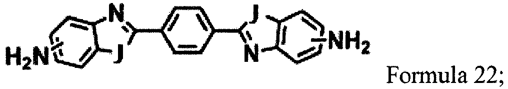 wherein in Formula 19, -G- is selected from -O-, -S-, -CH₂-, 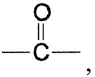 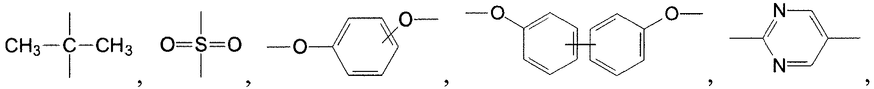 or 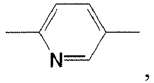 and is preferably -O-.

In Formulae 20 to 22, J is selected from O, S, or NH, and preferably selected from O or S.

In an embodiment of this invention, said diamine compound further comprises 4,4'-oxydianiline or p-phenylenediamine; and the structural formulae thereof are respectively:

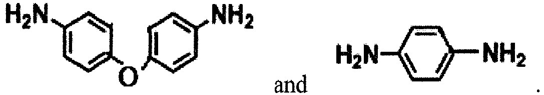

In one embodiment of this invention, said diamine compound comprises 5-amino-2-(2-hydroxy-4-aminophenyl)benzoxazole and 4,4'-oxydianiline. In another embodiment of this invention, said diamine compound comprises 5-amino-2-(2-hydroxy-5-aminophenyl)benzoxazole and p-phenylenediamine. In another embodiment of this invention, said diamine compound comprises 2,5-di(5-amino-benzoxazol-2-yl)-1,4-benzenediol and p-phenylenediamine. In another embodiment of this invention, said diamine compound comprises 5-amino-2-(2-hydroxy-4-aminophenyl)benzoxazole and p-phenylenediamine. Furthermore, the ratio of amounts between various diamine compounds is not particularly limited in this invention.

In this invention, said dianhydride compound comprises one or more of dianhydrides having structures of Formula 14 and Formula 15. Here, the dianhydride represented by Formula 14 is pyromellitic dianhydride. In Formula 15, t is selected from 0 or 1. When t is 0, two benzene rings are connected through a single bond at any position of positions 3, 4, 5, and 6, and preferably at position 3 or position 4; and when t is 1, two benzene rings are connected through a linking group E at any position of positions 3, 4, 5, and 6, and preferably at position 3 or position 4. In this invention, t is preferably 0.

In Formula 15 of this invention, E is selected from S, O, C(CF₃)₂, C(CH₃)₂, C=O, C=S, 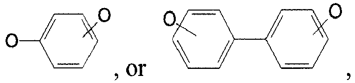 and preferably selected from S, O, C(CF₃)₂, C=O, or C=S.

In one embodiment of this invention, said dianhydride compound comprises 4,4'-biphthalic dianhydride, and the structural formula thereof is:

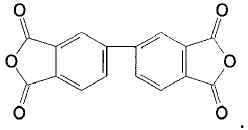

In one embodiment of this invention, said dianhydride compound comprises pyromellitic dianhydride. In another embodiment of this invention, said dianhydride compound comprises pyromellitic dianhydride and 4,4'-biphthalic dianhydride. In another embodiment of this invention, said dianhydride compound comprises 4,4'-biphthalic dianhydride and 3,4'-biphthalic dianhydride.

In this invention, said dianhydride compound and said diamine compound are subjected to a polymerization reaction to prepare a polyamic acid spinning solution. The molar ratio of said dianhydride compound to said diamine compound is preferably 1:(0.8-1.5), and more preferably 1:(0.9-1.2). In this invention, the polymerization is preferably performed at a temperature from -10°C to 50°C to prepare a precursor polyamic acid solution. That is, the temperature of the polymerization reaction is preferably in a range from -10°C to 50°C, and more preferably from 5°C to 40°C.

In this invention, a dianhydride monomer and a diamine monomer are polymerized in a solvent to prepare a precursor polyamic acid solution. The solvent used is typically a mixture composed of one or more of polar aprotic solvents, and is more preferably selected from one or more of N,N-dimethylformamide, N,N-dimethylacetamide, dimethyl sulfoxide, and N-methylpyrrolidone. The amount of said solvent is not particularly limited in this invention; and the concentration of said polyamic acid solution is preferably 5 wt%-35 wt%, and more preferably 10 wt%-30 wt%. In an embodiment of this invention, the intrinsic viscosity of said polyamic acid solution is between 1.5 dL/g and 3.7 dL/g.

After the polyamic acid solution is obtained, the spinning procedure of a polyamic acid fiber is performed in this invention. In an embodiment of this invention, the spinning solution prepared above is filtered, vacuum defoamed, and then spun by a spinning process such as dry-jet wet spinning, wet spinning, dry molding spinning, etc., to obtain a polyamic acid fiber.

In this invention, a dry-jet wet spinning process or a wet spinning process is preferably used, wherein the dry-jet wet spinning process comprises the procedures as follows. The spinning solution prepared above is filtered and vacuum defoamed, and may be extruded from a spinneret orifice on a spinneret through a metering pump, passed through a section of an air layer, passed into a coagulating bath to be molded, passed through a water washing tank, and dried through a hot roller or a hot gas channel to finally obtain a polyamic acid fiber.

In the dry-jet wet process, the orifice size of the spinneret is preferably Φ0.04 mm-Φ0.4 mm, and more preferably Φ0.05 mm-Φ0.3 mm; and the orifice number may be 10-10,000, and preferably 100-8,000. The spinning draft ratio is preferably 1.1-7.0, and more preferably 1.5-6.0; and the extrusion speed may be 5 m/min-100 m/min, and preferably 10 m/min-80 m/min. A extruded fine fluid may be passed through an air layer with a height of 3 mm-100 mm and then passed into a coagulating bath to be molded; and the height of said air layer is preferably 10 mm-80 mm. The coagulating bath used in this invention may be an alcohol-water solution, such as a mixture of water and any one of methanol, ethanol, ethylene glycol, butanol, acetone, and butanone, or may be a mixture of water and one of N,N-dimethylformamide, N,N-dimethylacetamide, dimethyl sulfoxide, N-methylpyrrolidone. A commonly used ratio of the solvent to water in said coagulating bath may be used. In one embodiment of this invention, the coagulating bath may be formed from N,N-dimethylacetamide and water, and the volume ratio therebetween is 1:5. In this invention, the atmosphere for said drying may be air, nitrogen gas, argon gas, or other inert gases, and is not particularly limited in this invention.

The wet spinning process comprises the procedures as follows. The spinning solution prepared above is filtered and vacuum defoamed, and may be extruded from a spinneret orifice on a spinneret through a metering pump, passed into a coagulating bath to be molded, passed through a water washing tank, and dried through a hot roller or a hot gas channel to obtain a polyamic acid fiber.

In the wet process, the orifice size of the spinneret is preferably Φ0.04 mm-Φ0.4 mm, and more preferably Φ0.05 mm-Φ0.3 mm; and the orifice number may be 10-12,000, and preferably 100-10,000. The spinning draft ratio is preferably 1.1-7.0, and more preferably 1.5-6.0; and the extrusion speed may be 5 m/min-100 m/min, and preferably 10 m/min-80 m/min. The coagulating bath used in this invention is well known by the person skilled in the art, and may be an alcohol-water solution, such as a mixture of water and any one of methanol, ethanol, ethylene glycol, butanol, acetone, and butanone, or may be a mixture of water and one of N,N-dimethylformamide, N,N-dimethylacetamide, dimethyl sulfoxide, N-methylpyrrolidone. The atmosphere for said drying may be air, nitrogen gas, argon gas, or other inert gases, and is not particularly limited in this invention.

In an embodiment of this invention, after the polyamic acid fiber is obtained, it is subjected to imidization and may be treated in a thermal imidization furnace to obtain a primary polyimide fiber. In this invention, said imidization is thermal imidization which is well known by the person skilled in the art, and is preferably performed by using a gradient heating thermal treatment furnace or a constant temperature thermal treatment furnace. In this invention, when the imidization is performed by gradient heating thermal treatment, the temperature range of said gradient heating thermal treatment is preferably 50°C-500°C, and more preferably 60°C-400°C; and the heating rate is preferably I°C/min-30°C/min, and more preferably 2°Cmin-20°C/min. In this invention, when the imidization is performed by constant temperature treatment, the temperature of said constant temperature treatment is preferably 300°C-500°C, and more preferably 350°C-450°C; and the time of treatment is preferably 5 min-60 min, and more preferably 10 min-50 min. In this invention, The atmosphere for said imidization may be air, nitrogen gas, argon gas, or other inert gases. In this invention, the imidization of the polyamic acid fiber is preferably performed under an atmosphere of nitrogen gas to obtain a primary polyimide fiber.

In an embodiment of this invention, the primary polyimide fiber obtained is subjected to thermal drawing to obtain a finished polyimide fiber. Said thermal drawing is not particularly limited in this invention. The temperature of said thermal drawing is preferably 30°C-570°C, and more preferably 50°C-500°C. The drawing ratio of said thermal drawing may be 1.0-6.0, and is preferably 2.0-5.0. The atmosphere for said thermal drawing may be air, nitrogen gas, argon gas, or other inert gases, and is preferably an atmosphere of nitrogen gas.

In this invention, after the polyimide fiber is obtained, the structures and properties thereof are detected. Here, a commonly used Fourier transform infrared spectroscopy (FT-IR) is used in this invention to analyze the structure of a finished fiber. Furthermore, scanning electron microscopic analysis and DSC thermal analysis are performed on the spun finished fiber in this invention. The test conditions of the DSC thermal analysis include: an atmosphere of nitrogen gas, a temperature in a range of room temperature to 400°C, and a heating rate of 10°C/min. The result shows that the glass transition temperature of said polyimide fiber may be 310°C-320°C.

In this invention, mechanical properties of a finished fiber are tested by using a FAVIMAT tester for linear density, degree of crimp, and tensile strength of single fiber available from Textechno Corporation, Germany. The test method comprises the procedures as follows. Each fiber is tested at least 10 times, and average values are employed. In test conditions, a modulus of deformation between 0.2%-0.4% is employed, a test form - Group9 (PBO) suitable for fibers having high strength and high modulus is employed, and the load cell in common parameters is 210 cN. In a Favimat fiber test, the gauge length is 20 mm, and the nominal linear density (Nominal L.D.) is 3.0 dtex. In a tensile test, the test speed is 5.0 mm/min, and the pretension is 2.00 cN/tex. In a linear density test, the test speed is 5.0 mm/min, the pretension is 1.00 cN/tex, and the correction value is 0.000%. It is indicated by results that the polyimide fiber provided by this invention has a highest strength of 4.5 GPa and a modulus of up to 212 GPa.

In summary, in this invention, specific diamine and dianhydride monomers are polymerized to produce a polyamic acid spinning solution, a polyamic acid fiber is then produced by spinning, and the polyamic acid fiber is subjected to thermal imidization and finally thermal drawing to obtain a polyimide fiber, which has properties of high strength and high modulus and has a relatively high usage temperature. In this invention, a wet or dry-jet wet spinning process may be used, which has a simple process and facilitates continuous production.

For further understanding of this application, the polyimide fiber and the preparation method thereof provided by this application are described in detail below in conjunction with Examples.

### Example 1

241.25 g (1.0 mol) of 6-amino-2-(2-hydroxy-4-aminophenyl)benzoxazole was weighed and dissolved in 3,500 mL of N,N-dimethylformamide, 294.22 g (1.0 mol) of 4,4'-biphthalic dianhydride was added with stirring, and reaction was performed at 30°C for 24 hours to obtain a light yellow viscous polyamic acid spinning solution having an intrinsic viscosity of 3.07 dL/g. The solution was directly used as spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (in a volume ratio of 1:2). Here, the spinneret had 200 orifices, the orifice size was Φ0.15 mm, the spinning draft ratio was 4.8, the spinning speed was 50 m/min, and the height of the air layer was 10 mm. The resultant primary fiber was washed with water and dried through a hot nitrogen gas channel to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 5°C/min. The resultant primary polyimide fiber was drawn at a drawing ratio of 1.5 under an atmosphere of nitrogen gas at 500°C to obtain a finished polyimide fiber.

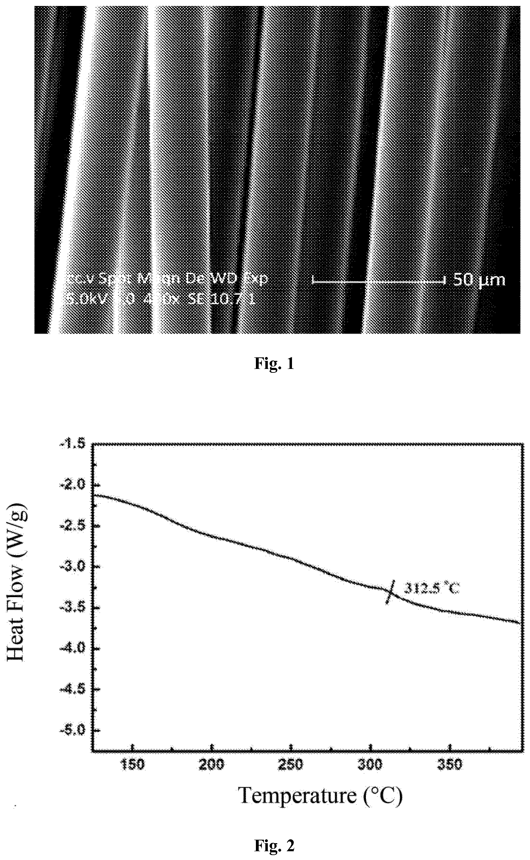

The finished fiber was tested according to the method hereinbefore. With reference to Fig. 1, Fig. 1 is a scanning electron microscope image of a finished fiber spun in Example 1 of this invention. The finished fiber had a breaking strength of 3.4 GPa, a modulus of 137.4 GPa, and an elongation at break of 2.8%. The structural formula of the polyimide fiber in this Example was as follow:

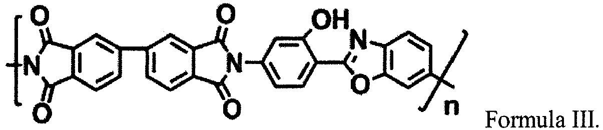

### Example 2

241.25 g (1.0 mol) of 5-amino-2-(2-hydroxy-4-aminophenyl)benzoxazole was weighed and dissolved in 3,500 mL of N,N-dimethylformamide, 294.22 g (1.0 mol) of 4,4'-biphthalic dianhydride was added with stirring, and reaction was performed at 30°C for 24 hours to obtain a light yellow viscous polyamic acid spinning solution having an intrinsic viscosity of 2.32 dL/g. The solution was directly used as spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (in a volume ratio of 1:4). Here, the spinneret had 200 orifices, the orifice size was Φ0.18 mm, the spinning draft ratio was 4.0, the spinning speed was 40 m/min, and the height of the air layer was 10 mm. The resultant primary fiber was washed with water and dried through a hot nitrogen gas channel to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 5°C/min. The resultant primary fiber was drawn at a drawing ratio of 1.5 under an atmosphere of nitrogen gas at 500°C to obtain a finished polyimide fiber.

The finished fiber was tested according to the method hereinbefore. With reference to Fig. 2, Fig. 2 is a DSC plot of a finished fiber spun in Example 2 of this invention. As can be seen from Fig. 2, Tg of the fiber was 312.5°C. The finished fiber had a breaking strength of 3.7 GPa, a modulus of 130.8 GPa, and an elongation at break of 2.4%. The molecular structural formula of the polyimide fiber in this Example was as follow:

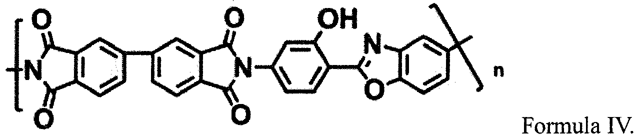

### Example 3

241.25 g (1.0 mol) of 5-amino-2-(2-hydroxy-5-aminophenyl)benzoxazole was weighed and dissolved in 3,800 mL of N,N-dimethylformamide, 294.22 g (1.0 mol) of 4,4'-biphthalic dianhydride was added with stirring, and reaction was performed at -10°C for 48 hours to obtain a light yellow viscous polyamic acid spinning solution having an intrinsic viscosity of 2.78 dL/g. The solution was directly used as spinning slurry after filtration.

The polyamic acid slurry described above was spun and molded by using a technical scheme of wet spinning, and the spinning slurry at 60°C was precisely metered with a metering pump, extruded from a spinneret orifice, and then passed into a coagulating bath of N,N-dimethylformamide and water (in a volume ratio of 1:6). Here, the spinneret had 100 orifices, the orifice size was Φ0.15 mm, the spinning draft ratio was 3.2, the spinning speed was 50 m/min, and the height of the air layer was 10 mm. The primary fiber was washed with water and dried through a hot nitrogen gas channel to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 5°C/min. The resultant primary fiber was drawn at a drawing ratio of 1.5 under an atmosphere of nitrogen gas at 500°C to obtain a finished polyimide fiber.

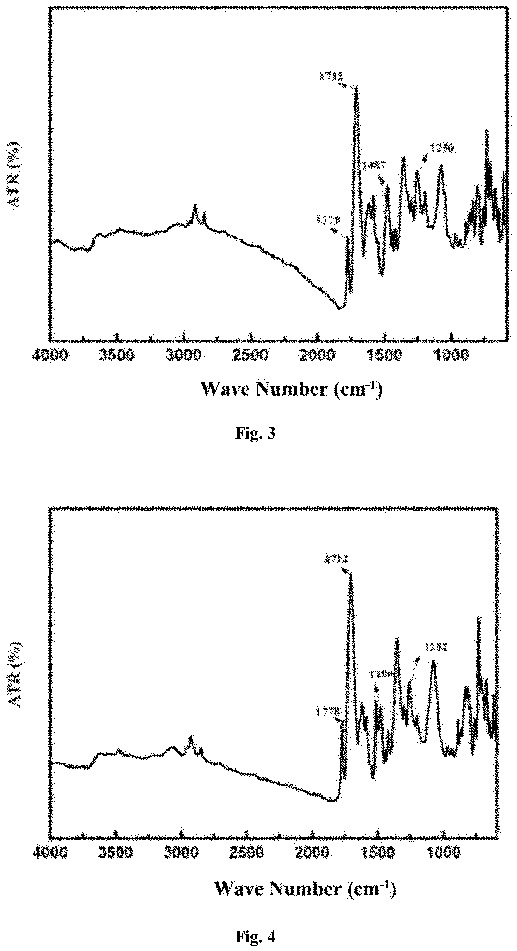

The finished fiber was tested according to the method hereinbefore. With reference to Fig. 3, Fig. 3 is a FT-IR spectrum of a finished fiber prepared in Example 3 of this invention. Here, 1778 cm⁻¹ was attributed to a symmetrical stretching vibration of a carbonyl group in an imine ring, 1712 cm⁻¹ was attributed to an asymmetric stretching vibration of a carbonyl group in an imine ring, 1487 cm⁻¹ was attributed to a stretching vibration of a benzoxazole ring, and 1250 cm⁻¹ was attributed to an asymmetric stretching vibration of C-O in a benzoxazole ring. The finished fiber had a breaking strength of 2.5 GPa, a modulus of 105 GPa, and an elongation at break of 2.1%. The molecular structural formula of the polyimide fiber in this Example was as follow:

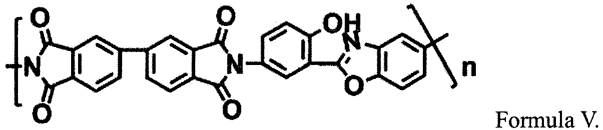

### Example 4

361.88 g (1.5 mol) of 5-amino-2-(2-hydroxy-5-aminophenyl)benzoxazole was weighed and dissolved in 4,500 mL of N,N-dimethylformamide, 163.66 g (0.75 mol) of pyromellitic dianhydride and 220.67 g (0.75 mol) of 4,4'-biphthalic dianhydride were added with stirring, and reaction was performed at -10°C for 10 hours to obtain a light yellow viscous polyamic acid spinning solution having an intrinsic viscosity of 2.14 dL/g. The solution was directly used as spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (in a volume ratio of 1:5). Here, the spinneret had 200 orifices, the orifice size was Φ0.18 mm, the spinning draft ratio was 3.6, the spinning speed was 60 m/min, and the height of the air layer was 10 mm. The resultant primary fiber was washed with water and dried through a hot nitrogen gas channel to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 5°C/min. The resultant primary fiber was drawn at a drawing ratio of 1.5 under an atmosphere of nitrogen gas at 500°C to obtain a finished polyimide fiber.

The finished fiber was tested according to the method hereinbefore. With reference to Fig. 4, Fig. 4 is a FT-IR spectrum of a finished fiber prepared in Example 4 of this invention. Here, 1778 cm⁻¹ was attributed to a symmetrical stretching vibration of a carbonyl group in an imine ring, 1712 cm⁻¹ was attributed to an asymmetric stretching vibration of a carbonyl group in an imine ring, 1490 cm⁻¹ was attributed to a stretching vibration of a benzoxazole ring, and 1252 cm⁻¹ was attributed to an asymmetric stretching vibration of C-O in a benzoxazole ring. The finished fiber had a breaking strength of 4.5 GPa, a modulus of 212 GPa, and an elongation at break of 2.3%. The molecular structural formula of the polyimide fiber in this Example was as follow:

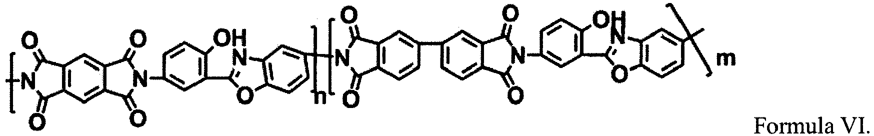

### Example 5

180.94 g (0.750 mol) of 5-amino-2-(2-hydroxy-4-aminophenyl)benzoxazole and 150.18 g (0.750 mol) of 4,4'-oxydianiline were weighed and dissolved in 3,500 mL of N,N-dimethylformamide, 441.34 g (1.50 mol) of 4,4'-biphthalic dianhydride was added with stirring, and reaction was performed at -10°C for 10 hours to obtain a light yellow viscous polyamic acid spinning solution having an intrinsic viscosity of 1.87 dL/g. The solution was directly used as spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (in a volume ratio of 1:4). Here, the spinneret had 100 orifices, the orifice size was Φ0.15 mm, the spinning draft ratio was 4.8, the spinning speed was 50 m/min, and the height of the air layer was 10 mm. The resultant primary fiber was washed with water and dried through a hot nitrogen gas channel to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 5°C/min. The resultant primary fiber was drawn at a drawing ratio of 1.5 under an atmosphere of nitrogen gas at 500°C to obtain a finished polyimide fiber.

The finished fiber was tested according to the method hereinbefore. The fiber had a breaking strength of 3.1 GPa, a modulus of 116.1 GPa, and an elongation at break of 3.4%. The structural formula of the polyimide fiber in this Example was:

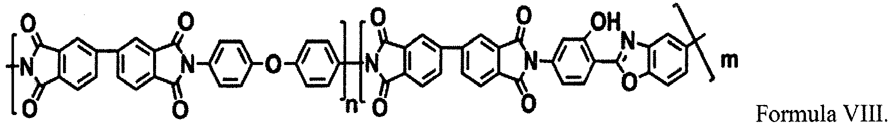

### Example 6

180.94 g (0.750 mol) of 5-amino-2-(2-hydroxy-5-aminophenyl)benzoxazole and 81.11 g (0.750 mol) of p-phenylenediamine were weighed and dissolved in 4,500 mL of N-methylpyrrolidone, 308.93 g (1.05 mol) of 4,4'-biphthalic dianhydride and 98.15 g (0.45 mol) of pyromellitic dianhydride were added with stirring, and reaction was performed at 40°C for 24 hours to obtain a light yellow viscous polyamic acid spinning solution having an intrinsic viscosity of 2.53 dL/g. The solution was directly used as spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N-methylpyrrolidone and water (in a volume ratio of 1:5). Here, the spinneret had 50 orifices, the orifice size was Φ0.12 mm, the spinning draft ratio was 3.6, the spinning speed was 40 m/min, and the height of the air layer was 5 mm. The resultant primary fiber was washed with water and dried through a hot argon gas channel to obtain a polyamic acid fiber.

The resultant polyamic acid fiber was treated with a gradient heating thermal imidization furnace under an atmosphere of argon gas to obtain a primary polyimide fiber. Here, the temperature of thermal imidization was 50°C-400°C and the heating rate was 10°C/min. The resultant primary fiber was drawn at a drawing ratio of 1.2 under an atmosphere of argon gas at 530°C to obtain a finished polyimide fiber.

The finished fiber was tested according to the method hereinbefore. The fiber had a breaking strength of 3.8 GPa, a modulus of 155.2 GPa, and an elongation at break of 2.3%. The structural formula of the polyimide fiber in this Example was:

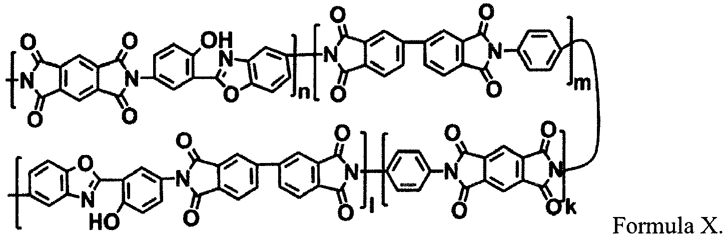

### Example 7

385.97 g (1.5 mol) of 5-amino-2-(2-hydroxy-4-aminophenyl)benzothiazole was weighed and dissolved in 4,700 mL of N,N-dimethylformamide, 220.67 g (0.75 mol) of 4,4'-biphthalic dianhydride and 163.67 g (0.75 mol) of pyromellitic dianhydride were added with stirring, and reaction was performed at 30°C for 12 hours to obtain a light yellow viscous polyamic acid spinning solution having an intrinsic viscosity of 2.91 dL/g. The solution was directly used as spinning slurry after filtration.

The polyamic acid slurry described above was spun and molded by using dry-jet wet spinning, and the spinning slurry at normal temperature was precisely metered with a metering pump, extruded from a spinning orifice, passed through an air layer, and then passed into a coagulating bath of N,N-dimethylformamide and water (in a volume ratio of 1:5). Here, the spinneret had 100 orifices, the orifice size was Φ0.15 mm, the spinning speed was 100 m/min, the spinning draft ratio was 5.0, and the height of the air layer was 60 mm. The resultant primary fiber was washed with water and dried through a hot roller to obtain a polyamic acid fiber.

The resultant polyamic acid fiber was treated with a gradient heating thermal treatment furnace under an atmosphere of nitrogen gas to obtain a primary polyimide fiber. Here, the temperature of thermal imidization was 50°C-400°C and the heating rate was 5°C/min. The resultant primary fiber was drawn at a drawing ratio of 1.3 under an atmosphere of nitrogen gas at 510°C to obtain a finished polyimide fiber.

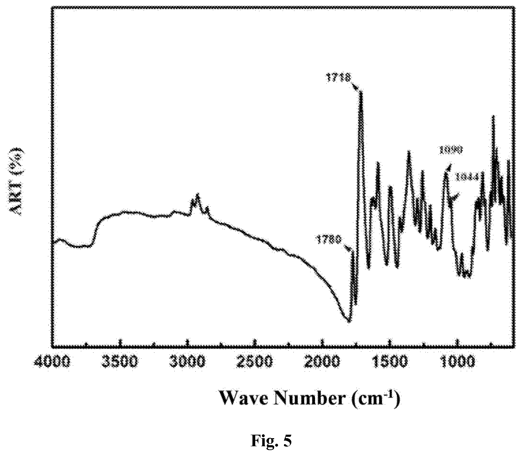

The finished fiber was tested according to the method hereinbefore. With reference to Fig. 5, Fig. 5 is a FT-IR spectrum of a finished fiber prepared in Example 7 of this invention. Here, 1780 cm⁻¹ was attributed to a symmetrical stretching vibration of a carbonyl group in an imine ring, 1718 cm⁻¹ was attributed to an asymmetric stretching vibration of a carbonyl group in an imine ring, 1044 cm⁻¹ was attributed to a stretching vibration of a benzothiazole ring, and 1090 cm⁻¹ was attributed to an asymmetric stretching vibration of C-S in a benzothiazole ring. The finished fiber had a breaking strength of 3.1 GPa, a modulus of 116.8 GPa, and an elongation at break of 3.2%. The molecular structural formula of the polyimide fiber in this Example was as follow:

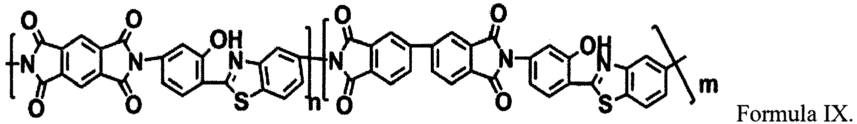

### Example 8

374.35 g (1.0 mol) of 2,5-di(5-amino-benzoxazol-2-yl)-1,4-benzenediol and 54.07 g (0.50 mol) of p-phenylenediamine were weighed and dissolved in 5,300 mL of N,N-dimethylacetamide, 220.67 g (0.75 mol) of 4,4'-biphthalic dianhydride and 163.67 g (0.75 mol) of pyromellitic dianhydride were added with stirring, and reaction was performed at 30°C for 12 hours to obtain a light yellow viscous polyamic acid spinning solution having an intrinsic viscosity of 2.03 dL/g. The solution was directly used as spinning slurry after filtration.

The polyamic acid slurry described above was spun and molded by using dry-jet wet spinning, and the spinning slurry at normal temperature was precisely metered with a metering pump, extruded from a spinneret orifice, passed through an air layer, and then passed into a coagulating bath of N,N-dimethylacetamide and water (in a volume ratio of 1:5). Here, the spinneret had 200 orifices, the orifice size was Φ0.08 mm, the spinning speed was 15 m/min, the spinning draft ratio was 2.80, and the height of the air layer was 20 mm. The resultant primary fiber was washed with water and dried through a hot roller to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 1°C/min. The resultant primary fiber was drawn at a drawing ratio of 2.5 under an atmosphere of nitrogen gas at 550°C to obtain a finished polyimide fiber.

The finished fiber was tested according to the method hereinbefore. The fiber had a breaking strength of 4.1 GPa, a modulus of 206.1 GPa, and an elongation at break of 2.1%. The structural formula of the polyimide fiber in this Example was:

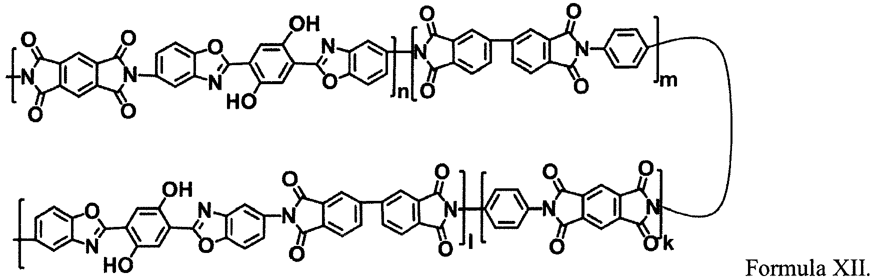

### Example 9

180.94 g (0.750 mol) of 5-amino-2-(2-hydroxy-4-aminophenyl)benzoxazole and 81.11 g (0.750 mol) of p-phenylenediamine were weighed and dissolved in 5,000 mL of N-methylpyrrolidone, 308.93 g (1.05 mol) of 4,4'-biphthalic dianhydride and 132.40 g (0.45 mol) of 3,4'-biphthalic dianhydride were added with stirring, and reaction was performed at -5°C for 24 hours to obtain a light yellow viscous polyamic acid spinning solution having an intrinsic viscosity of 2.42 dL/g. The solution was directly used as spinning slurry after filtration.

The polyamic acid slurry described above was spun and molded by using dry-jet wet spinning, and the spinning slurry at normal temperature was precisely metered with a metering pump, extruded from a spinneret orifice, passed through an air layer, and then passed into a coagulating bath of N,N-dimethylacetamide and water (in a volume ratio of 1:5). Here, the spinneret had 200 orifices, the orifice size was Φ0.10 mm, the spinning speed was 4 m/min, the spinning draft ratio was 3.0, and the height of the air layer was 2 mm. The resultant primary fiber was washed with water and dried through a hot roller to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 10°C/min. The resultant primary fiber was drawn at a drawing ratio of 2.1 under an atmosphere of nitrogen gas at 500°C to obtain a finished polyimide fiber.

The finished fiber was tested according to the method hereinbefore. The fiber had a breaking strength of 3.70 GPa, a modulus of 140.3 GPa, and an elongation at break of 2.1%. The structural formula of the polyimide fiber in this Example was:

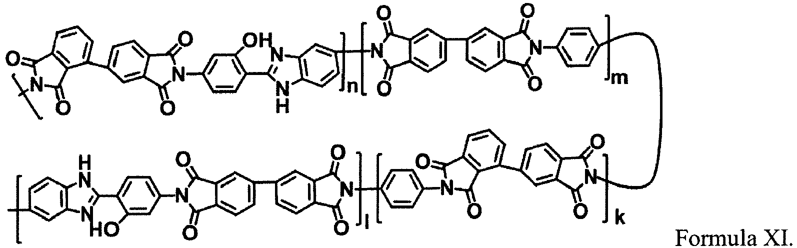

### Example 10

180.94 g (0.75 mol) of 5-amino-2-(2-hydroxy-4-aminophenyl)benzoxazole and 180.94 g (0.750 mol) of 5-amino-2-(2-hydroxy-5-aminophenyl)benzoxazole were weighed and dissolved in 5,000 mL of N,N-dimethylacetamide, 441.34 g (1.50 mol) of 4,4'-biphthalic dianhydride was added with stirring, and reaction was performed at room temperature for 24 hours to obtain a light yellow viscous polyamic acid spinning solution having an intrinsic viscosity of 3.12 dL/g. The solution was directly used as spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylacetamide and water (in a volume ratio of 1:5). Here, the spinneret had 200 orifices, the orifice size was Φ0.18 mm, the spinning draft ratio was 3.8, the spinning speed was 45 m/min, and the height of the air layer was 10 mm. The resultant primary fiber was washed with water and dried through a hot nitrogen gas channel to obtain a polyamic acid fiber.

The resultant polyamic acid fiber was treated with a gradient heating thermal imidization furnace under an atmosphere of nitrogen gas to obtain a primary polyimide fiber. Here, the temperature of thermal imidization was 50°C-400°C and the heating rate was 5°C/min. The resultant primary fiber was drawn at a drawing ratio of 1.5 under an atmosphere of nitrogen gas at 500°C to obtain a finished polyimide fiber.

The finished fiber was tested according to the method hereinbefore. The fiber had a breaking strength of 3.9 GPa, a modulus of 142.6 GPa, and an elongation at break of 2.4%. The structural formula of the polyimide fiber in this Example was:

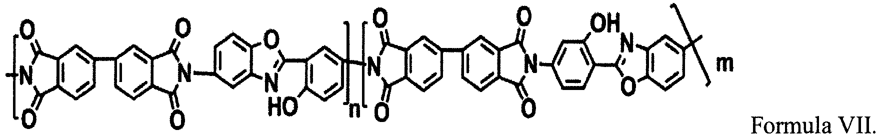

## Claims

1. A polyimide fiber produced from a polymer, **characterized in that** said polymer has a structure of Formula III, Formula IV, Formula V, Formula VI, Formula VII, Formula VIII, Formula IX, Formula X, Formula XI, or Formula XII: 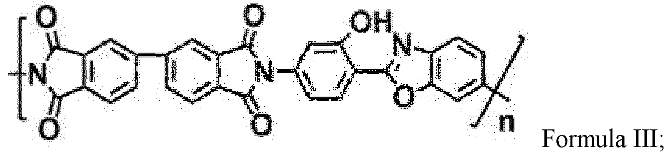 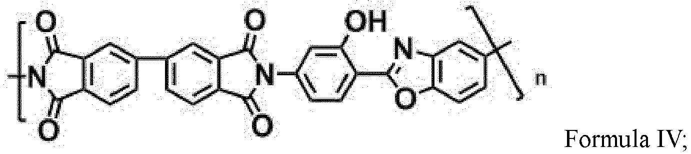 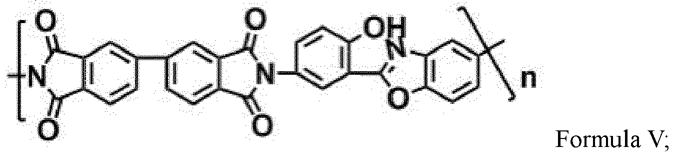 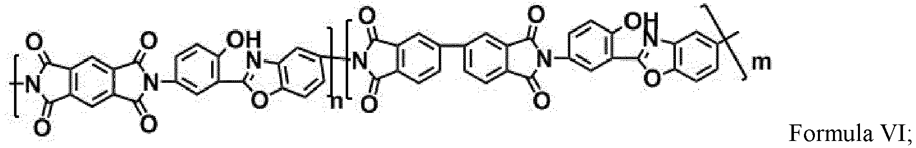 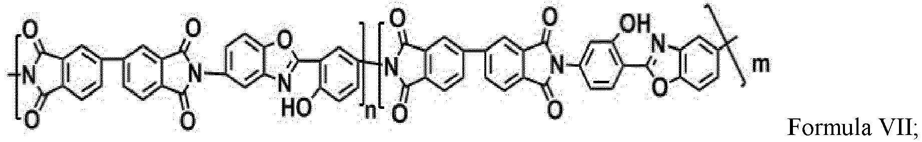 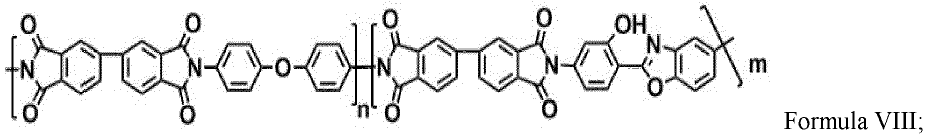 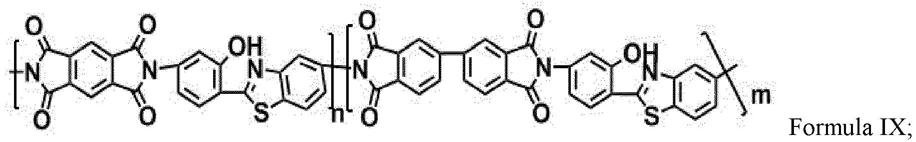 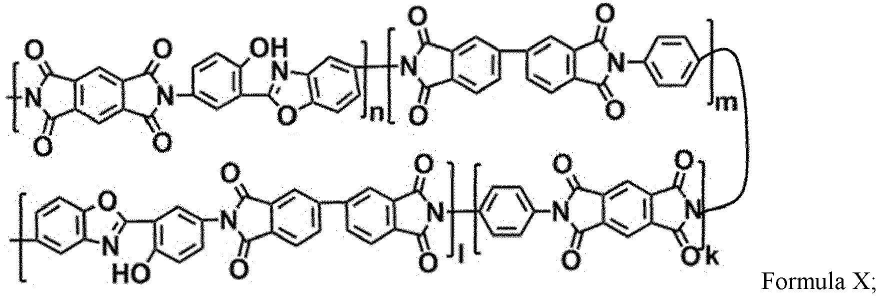 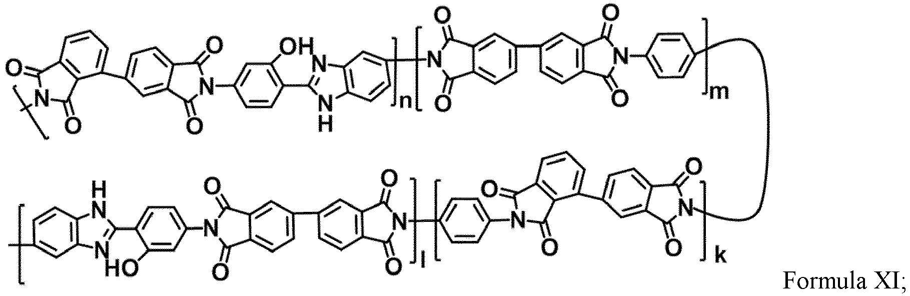 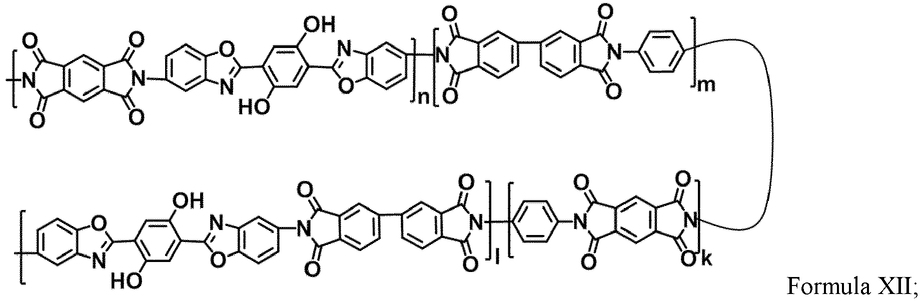 wherein each of n, m, 1, and k represents a polymerization degree

2. A preparation method for the polyimide fiber as defined in claim 1, **characterized in that** the preparation method comprises the steps of:
A) subjecting a dianhydride compound and a diamine compound to a polymerization reaction in a solvent to obtain a polyamic acid solution, wherein said diamine compound comprises a diamine having a structure of Formula 12 or Formula 13: 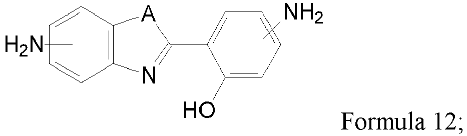 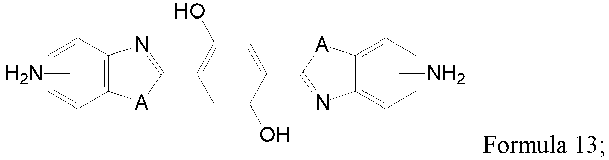 wherein A is selected from S or O;
said dianhydride compound comprises one or more of dianhydrides having structures of Formula 14 and Formula 15: 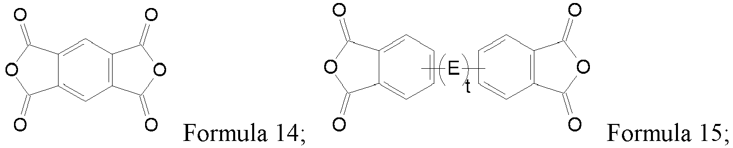 in Formula 15, E is selected from S, O, C(CF₃)₂, C(CH₃)₂, C=O, C=S, 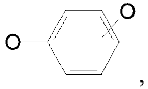 or 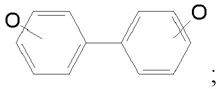 and
t is selected from 0 or 1;
B) subjecting said polyamic acid solution to spinning to obtain a polyamic acid fiber; and
C) sequentially subjecting said polyamic acid fiber to imidization and thermal drawing to obtain a polyimide fiber,
or said diamine compound further comprises one or more of diamines having structures of Formulae 16 to 22: 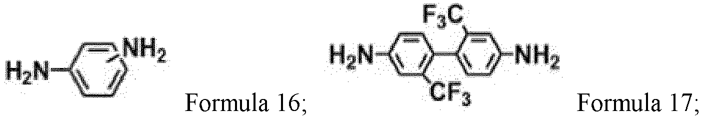 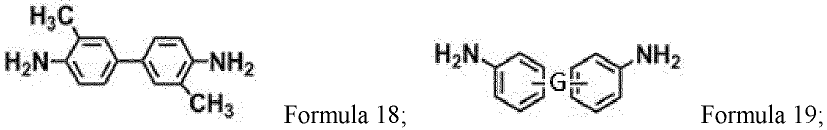 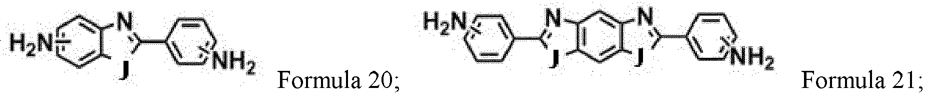 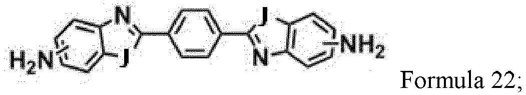 wherein -G- is selected from -O-, -S-, -CH₂-, 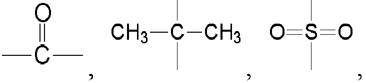 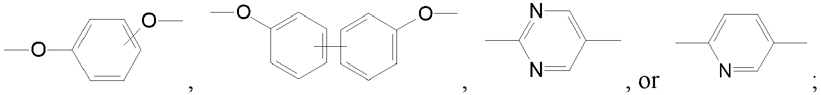 and
J is selected from O, S, or NH

3. The preparation method according to claim 2, **characterized in that** the temperature of said polymerization reaction is in a range from -10°C to 50°C.

4. The preparation method according to claim 2, **characterized in that** the intrinsic viscosity of said polyamic acid solution is between 1.5 dL/g and 3.7 dL/g.

5. The preparation method according to claim 4, **characterized in that** the concentration of said polyamic acid solution is 5 wt%-35 wt%.

6. The preparation method according to claim 2, **characterized in that** the molar ratio of said dianhydride compound to said diamine compound is 1 :(0.8-1.5).

7. The preparation method according to claim 2, **characterized in that** said solvent in step A) is an aprotic polar solvent.

8. The preparation method according to claim 7, **characterized in that** said aprotic polar solvent is selected from one or more of N,N-dimethylformamide, N,N-dimethylacetamide, dimethyl sulfoxide, and N-methylpyrrolidone.

9. The preparation method according to claim 2, **characterized in that** said spinning is dry-jet wet spinning, wherein a spinneret for the dry-jet wet spinning has a orifice size of Φ0.04 mm-Φ0.4 mm and an orifice number of 10-10,000; a spinning draft ratio of the dry-jet wet spinning is 1.1-7.0; and an extrusion speed of the dry-jet wet spinning is 5 m/min-100 m/min.

10. The preparation method according to claim 2, **characterized in that** said spinning is wet spinning, wherein a spinneret for the wet spinning has a orifice size of Φ0.04 mm-Φ0.4 mm and an orifice number of 10-12,000; a spinning draft ratio of the wet spinning is 1.1-7.0; and an extrusion speed of the wet spinning is 5 m/min-100 m/min.

11. The polyimide fiber according to claim 1, **characterized in that** the fineness of said polyimide fiber is between 2 dtex and 4 dtex, the breaking strength of said polyimide fiber is 2.3 GPa-4.5 GPa, or the modulus of said polyimide fiber is 105 GPa-212 GPa.

## Patentansprüche

1. Polyimidfaser, erzeugt aus einem Polymer, **dadurch gekennzeichnet, dass** das Polymer eine Struktur der Formel III, Formel IV, Formel V, Formel VI, Formel VII, Formel VIII, Formel IX, Formel X, Formel XI oder Formel XII hat: 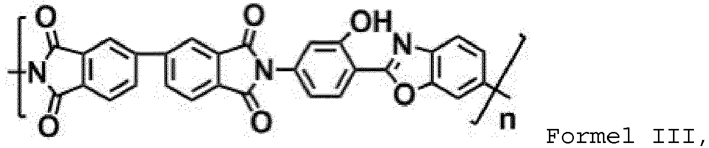 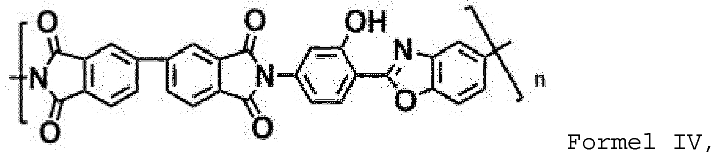 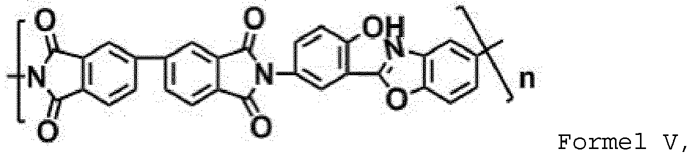 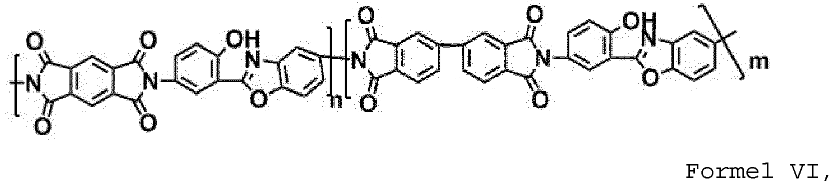 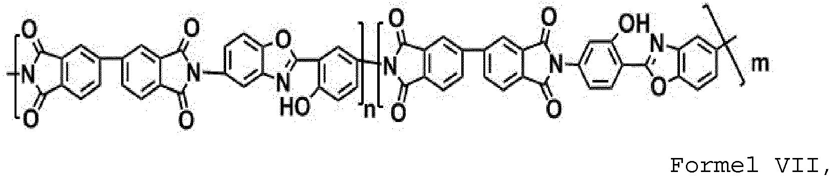 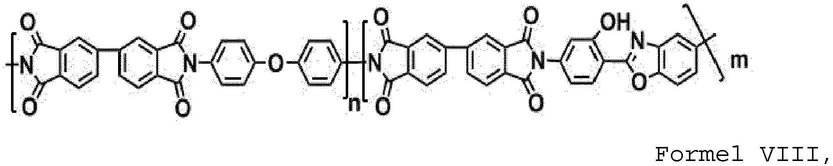 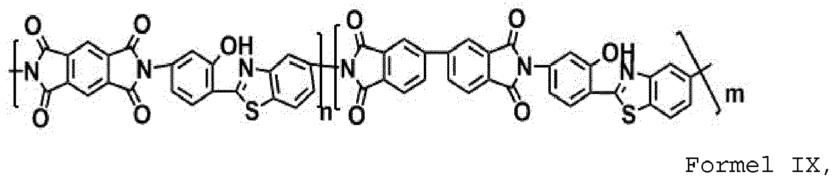 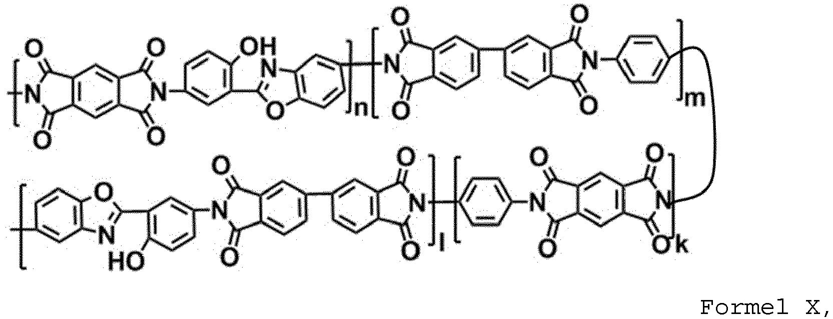 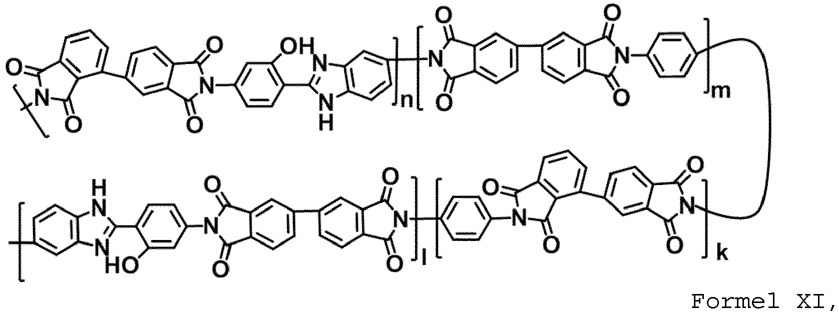 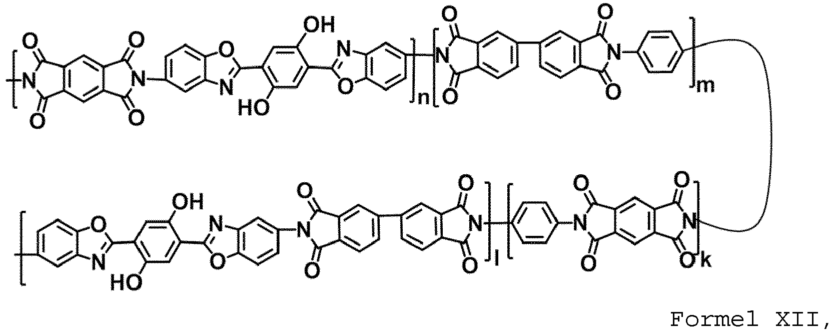 worin jedes von n, m, 1 und k ein Polymerisationsgrad ist.

2. Herstellverfahren für die Polyimidfaser wie in Anspruch 1 definiert, **dadurch gekennzeichnet, dass** das Herstellverfahren die Schritte enthält:
A) Durchführen einer Polymerisationsreaktion einer Dianhydridverbindung und einer Diaminverbindung in einem Lösungsmittel, unter Erhalt einer Polyaminsäurelösung, worin die Diaminverbindung ein Diamin mit einer Struktur der Formel 12 oder Formel 13 enthält: 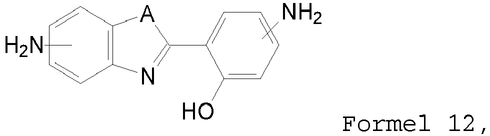 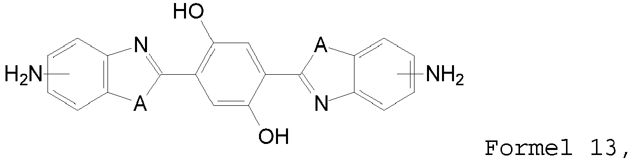 worin A ausgewählt ist aus S oder O,
worin die Dianhydridverbindung ein oder mehrere von Dianhydriden mit Strukturen der Formel 14 und Formel 15 enthält: 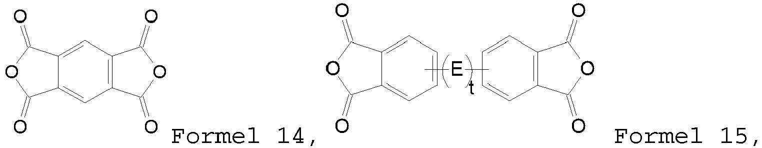 worin in der Formel 15 E ausgewählt ist aus S, O, C(CF₃)₂, C(CH₃)₂, C=O, C=S, 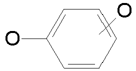 oder 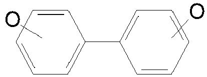 ist und
t ausgewählt ist aus 0 oder 1,
(B) Durchführen von Spinnen mit der Polyaminsäurelösung, unter Erhalt einer Polyaminsäurefaser und
(C) aufeinanderfolgendes Durchführen einer Imidisierung und thermischen Ziehens mit der Polyaminsäurefaser, unter Erhalt einer Polyimidfaser,
oder worin die Diaminverbindung weiterhin ein oder mehrere Diamine mit Strukturen der Formeln 16 bis 22 enthält: 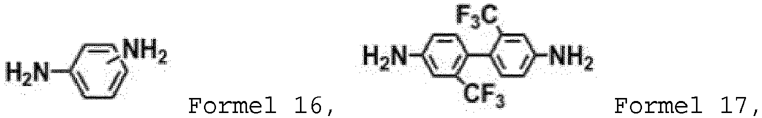 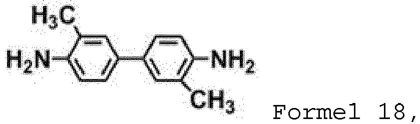 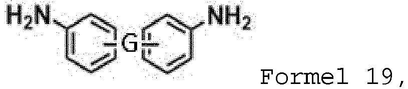 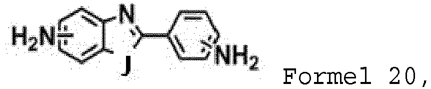 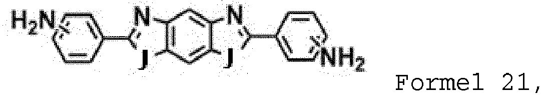 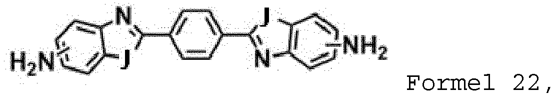 worin -G- ausgewählt ist aus -O-, -S-, -CH₂-, 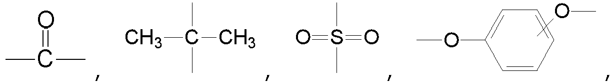 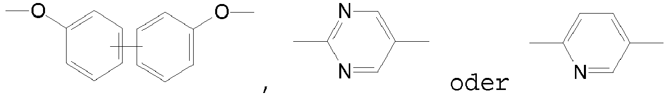 und
J ausgewählt ist aus O, S oder NH.

3. Herstellverfahren gemäß Anspruch 2, **dadurch gekennzeichnet, dass** die Temperatur der Polymerisationsreaktion in einem Bereich von -10 bis 50°C ist.

4. Herstellverfahren gemäß Anspruch 2, **dadurch gekennzeichnet, dass** die Eigenviskosität der Polyaminsäurelösung zwischen 1,5 dl/g und 3,7 dl/g ist.

5. Herstellverfahren gemäß Anspruch 4, **dadurch gekennzeichnet, dass** die Konzentration der Polyaminsäurelösung 5 bis 35 Gew.-% ist.

6. Herstellverfahren gemäß Anspruch 2, **dadurch gekennzeichnet, dass** das molare Verhältnis der Dianhydridverbindung zu der Diaminverbindung 1:(0,8-1,5) ist.

7. Herstellverfahren gemäß Anspruch 2, **dadurch gekennzeichnet, dass** das Lösungsmittel im Schritt A) ein aprotisches polares Lösungsmittel ist.

8. Herstellverfahren gemäß Anspruch 7, **dadurch gekennzeichnet, dass** das aprotische polare Lösungsmittel ausgewählt ist aus einem oder mehreren von N,N-Dimethylformamid, N,N-Dimethylacetamid, Dimethylsulfoxid und N-Methylpyrrolidon.

9. Herstellverfahren gemäß Anspruch 2, **dadurch gekennzeichnet, dass** das Spinnen ein Trockenstrahl-Nassspinnen ist, worin eine Spinndüse für das Trockenstrahl-Nassspinnen eine Öffnungsgröße von Φ0,04 mm-Φ0,4 mm und eine Öffnungszahl von 10-10.000 hat, ein Spinn-Zugverhältnis des Trockenstrahl-Nassspinnens 1,1-7,0 ist und eine Extrusionsgeschwindigkeit des Trockenstrahl-Nassspinnens 5-100 m/min ist.

10. Herstellverfahren gemäß Anspruch 2, **dadurch gekennzeichnet, dass** das Spinnen ein Nassspinnen ist, worin eine Spinndüse für das Nassspinnen eine Öffnungsgröße von Φ0,04 mm-Φ0,4 mm hat und eine Öffnungszahl von 10-12.000 hat, ein Spinn-Zugverhältnis des Nassspinnens 1,1-7,0 ist und eine Extrusionsgeschwindigkeit das Nassspinnens 5-100 m/min ist.

11. Polyimidfaser gemäß Anspruch 1, **dadurch gekennzeichnet, dass** die Feinheit der Polyimidfaser zwischen 2 und 4 dtex ist, die Bruchfestigkeit der Polyimidfaser 2,3-4,5 GPa ist oder der Modul der Polyimidfaser 105-212 GPa ist.

## Revendications

1. Fibre de polyimide produite à partir d'un polymère, **caractérisée en ce que** ledit polymère présente une structure de Formule III, Formule IV, Formule V, Formule VI, Formule VII, Formule VIII, Formule IX, Formule X, Formule XI ou Formule XII : 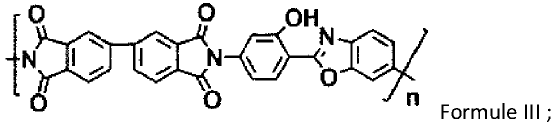 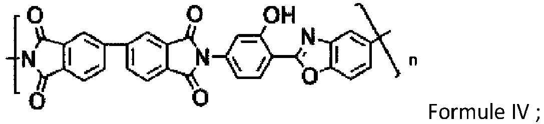 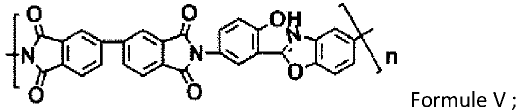 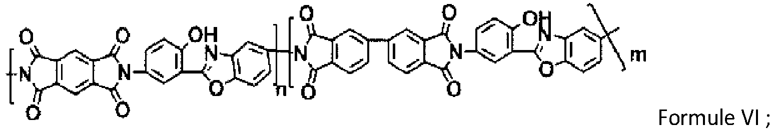 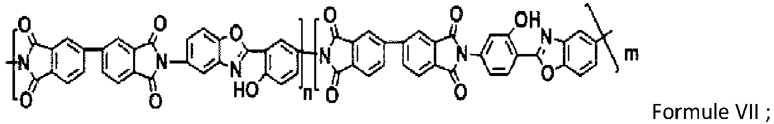 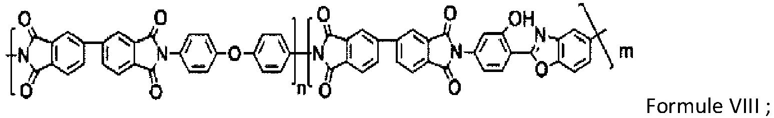 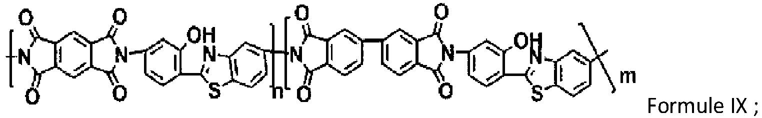 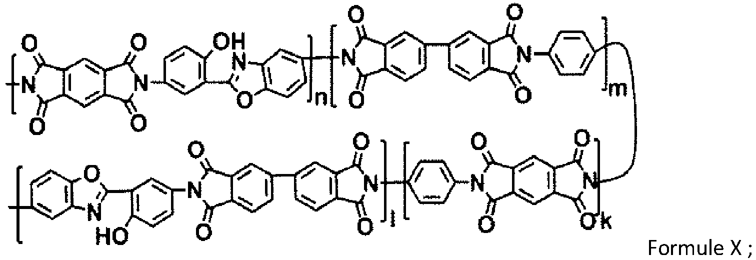 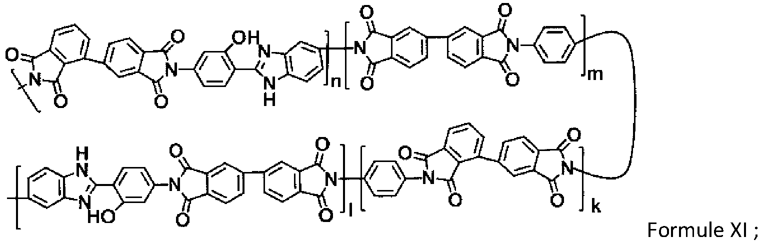 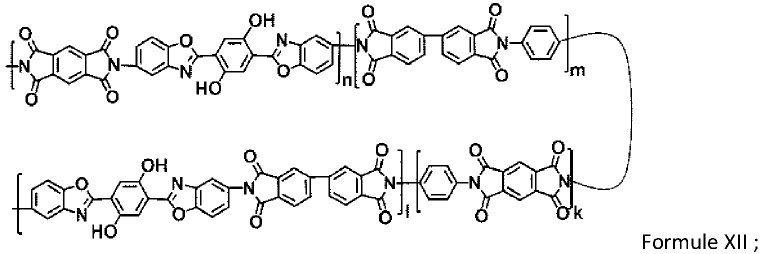 dans laquelle chacun de n, m, l et k représente un degré de polymérisation.

2. Procédé de préparation de la fibre de polyimide selon la revendication 1, **caractérisé en ce que** le procédé de préparation comprend les étapes consistant à :
A) soumettre un composé de dianhydride et un composé de diamine à une réaction de polymérisation dans un solvant pour obtenir une solution d'acide polyamique, dans lequel ledit composé de diamine comprend une diamine présentant une structure de Formule 12 ou de Formule 13 : 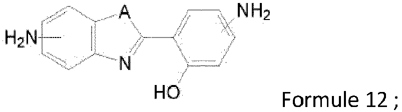 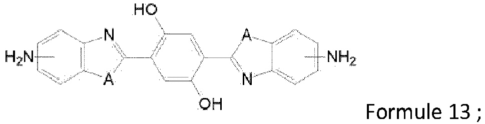 dans lequel A est sélectionné parmi S ou O ;
ledit composé de dianhydride comprend un ou plusieurs des dianhydrides présentant des structures de Formule 14 et de Formule 15 : 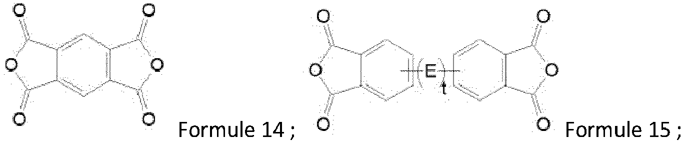 dans la Formule 15, E est sélectionné parmi S, O, C(CF₃)₂, C(CH₃)₂, C=O, C=S, 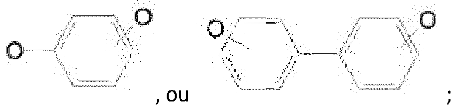 et
t est sélectionné parmi 0 ou 1 ;
B) soumettre ladite solution d'acide polyamique à un filage pour obtenir une fibre d'acide polyamique ; et
C) soumettre séquentiellement ladite fibre d'acide polyamique à une imidation et à un étirage à chaud pour obtenir une fibre de polyimide,
ou ledit composé de diamine comprend en outre une ou plusieurs diamines présentant des structures des Formules 16 à 22 : 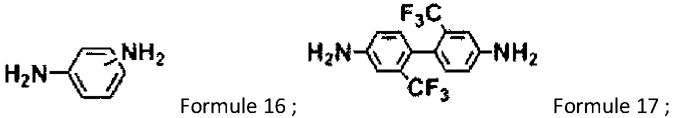 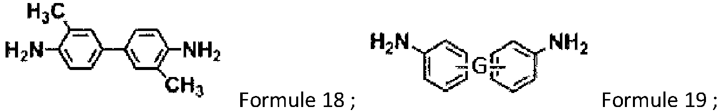 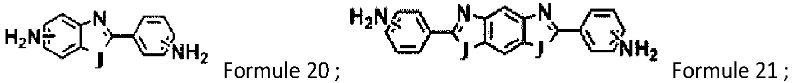 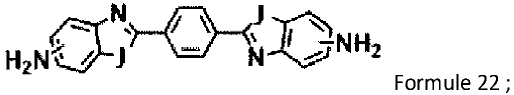 dans lequel -G- est sélectionné parmi -O-, -S-, -CH₂-, 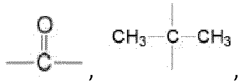 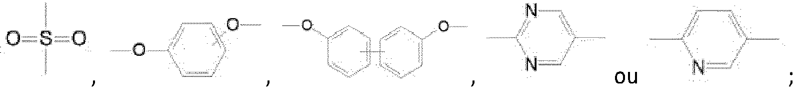 et
J est sélectionné parmi O, S ou NH.

3. Procédé de préparation selon la revendication 2, **caractérisé en ce que** la température de ladite réaction de polymérisation est dans une plage de -10 °C à 50 °C.

4. Procédé de préparation selon la revendication 2, **caractérisé en ce que** la viscosité intrinsèque de ladite solution d'acide polyamique est entre 1,5 dl/g et 3,7 dl/g.

5. Procédé de préparation selon la revendication 4, **caractérisé en ce que** la concentration de ladite solution d'acide polyamique est de 5 % en poids à 35 % en poids.

6. Procédé de préparation selon la revendication 2, **caractérisé en ce que** le rapport molaire dudit composé de dianhydride audit composé de diamine est de 1:(0,8-1,5).

7. Procédé de préparation selon la revendication 2, **caractérisé en ce que** ledit solvant de l'étape A) est un solvant polaire aprotique.

8. Procédé de préparation selon la revendication 7, **caractérisé en ce que** ledit solvant polaire aprotique est sélectionné parmi un ou plusieurs de N,N-diméthylformamide, N,N-diméthylacétamide, diméthylsulfoxyde et N-méthylpyrrolidone.

9. Procédé de préparation selon la revendication 2, **caractérisé en ce que** ledit filage est un filage humide à jet sec, dans lequel une filière pour le filage humide à jet sec présente une taille d'orifice de Φ0,04 mm-Φ0,4 mm et un nombre d'orifices de 10-10 000 ; un rapport de tirage de filage du filage humide à jet sec est de 1,1-7,0 ; et une vitesse d'extrusion du filage humide à jet sec est de 5 m/min-100 m/min.

10. Procédé de préparation selon la revendication 2, **caractérisé en ce que** ledit filage est un filage humide, dans lequel une filière pour le filage humide présente une taille d'orifice de Φ0,04 mm-Φ0,4 mm et un nombre d'orifices de 10-12 000; un rapport de tirage de filage du filage humide est de 1,1-7,0 ; et une vitesse d'extrusion du filage humide est de 5 m/min-100 m/min.

11. Fibre de polyimide selon la revendication 1, **caractérisée en ce que** la finesse de ladite fibre de polyimide est entre 2 dtex et 4 dtex, la résistance à la rupture de ladite fibre de polyimide est de 2,3 GPa-4,5 GPa, ou le module de ladite fibre de polyimide est de 105 GPa-212 GPa.
